# EUROPEAN PATENT APPLICATION

(11) **EP 4 156 636 A1**
(43) Date of publication of application: **29.03.2023**
(21) Application number: 21198900.9
(22) Date of filing: 24.09.2021
(51) Int. Cl.: H04L 45/02, H04L 45/24, H04L 45/745

(54) **MULTI-PATH PUBLIC NETWORK ACCESS**

(71) Applicant: Tessares SA, 1348 Louvain-La-Neuve (BE)
(72) Inventor: Bonaventure, Olivier, 5030 Gembloux (BE); Périquet, Denis, 1180 Bruxelles (BE); Keukeleire, Nicolas, 1050 Bruxelles (BE); Detal, Gregory, 5032 Isnes (BE)
(74) Representative: IP HILLS NV

(57) **Abstract**

Example embodiments describe a method for providing a first network (110) multi-path network access to a public network (160); wherein the first network (110) is connected to a first (120) and second (130) access network by a hybrid customer premises equipment, HCPE, (312) configurable to operate according to a hybrid-disabled mode (300) and a hybrid-enabled mode; wherein the first (120) and second (130) access network are connected to the public network (160) over a core network (140); the method comprising, when configuring the HCPE to the hybrid-enabled mode, i) reconfiguring (805) routing (341) in the core network to route network traffic (422) from the public network destined for the first network along a hybrid aggregation gateway, HAG, (351) in the core network; and ii) by the HCPE and HAG, enabling the multi-path network access between the HCPE and the HAG over the first and second access network for network connections between the first network and the public network; and, when configuring the HCPE to the hybrid-disabled mode, i) disabling the multi-path network access by the HCPE thereby providing single path network access (371) to the first network (110); and ii) reconfiguring the routing (341) to bypass the HAG for network traffic (371) between the first network (110) and the public network (160).

## Description

### Technical Field

Various example embodiments relate to providing a first network multi-path network access to a public network along multiple access networks.

### Background

In telecommunications, a subscriber is connected to its network service provider via an access network. The service provider can then provide different services from within its core network and further connect the subscriber to the Internet. Traditionally the subscriber's private or local network is connected by a customer premises equipment, CPE, to a wired access network, e.g., to a digital subscriber line, DSL, access network, a cable access network, or an optical fibre network. Recently, solutions have emerged that provide so-called hybrid network access or shortly hybrid access wherein network access is provided by the coordinated and simultaneous use of two or even more heterogeneous access paths along different access networks. These different access paths are then established between the CPE at the subscriber's side and a hybrid access gateway, shortly HAG, within the operator's core network. The CPE that supports such hybrid access is typically denoted as a hybrid CPE or, shortly, HCPE.

An overview of different implementations for hybrid access is disclosed by the broadband forum in the technical report TR-378, 'Nodal Requirements for Hybrid Access Broadband Networks', Issue: 1, Issue Date: May 2019. Implementations can be broken down according to the underlying transport model between the HCPE and the HAG. A first implementation uses Layer 3 network tunnelling between the HCPE and HAG whereas a second implementation uses a Layer 4 multipath transport service enabling IP flows to use multiple paths simultaneously.

For the second solution, the Multi-Path Transmission Control Protocol, shortly MPTCP, may be used to set up multiple Transmission Control Protocol (TCP) subflows over the different access networks. The latest version of Multipath TCP is published by the IETF in March 2020 as the Multipath TCP v1 specification in RFC 8684. When using MPTCP hybrid access, the single path networks connections between networking nodes in the subscriber's private network and networking nodes in the public network are locally converted to multi-path network connections between the HCPE and the HAG. The standard TCP flow and congestion control schemes may then be used to control the real time HCPE to HAG flow control. The HCPE and HAG are then responsible for managing the MPTCP hybrid access paths, including establishment and tear down.

The HAG can be deployed according to different deployment scenarios. A first scenario is an off-path scenario wherein the HAG may be anywhere in the network as long as it is reachable by the HCPE using the HAG's network address. A problem with this is that the HAG is no longer transparent to the public network, i.e. it appears as the HAG is communicating with the public network and not the HCPE.

A second possible scenario is an on-path scenario wherein the HAG is located on the forwarding path between the HCPE and public network for at least the primary access network such that all traffic will pass through the HAG, irrespective of the destination address of the network packets. The advantage of the on-path scenario is that the HAG can function as a transparent proxy towards the public network, i.e. the HAG is not visible to the public network because only the network address of the HCPE appears in these packets as either the destination or source address.

A problem with the on-path scenario is that all traffic for all HCPEs has to pass through the HAG, regardless of whether it is single-path of multi-path, otherwise the HCPE is not able to setup the multi-path connections. In some cases, the HAG cannot be placed optimally within the core network, e.g. within the normal network route of the single-path route over the first access network. This is for example the case when the first access network is managed by a wholesale Internet Service Provider and hybrid network access is provided by a virtual Internet Service Provider, vISP, that provides the hybrid network access.

### Summary

The scope of protection sought for various embodiments of the invention is set out by the independent claims.

Amongst others, it is an object of embodiments of the present disclosure to overcome the above identified shortcoming and to provide an improved solution for providing multi-path network access.

This object is achieved, according to a first example aspect of the present disclosure, by method for providing a first network multi-path network access to a public network; wherein the first network is connected to a first and second access network by a hybrid customer premises equipment, HCPE, configurable to operate according to a hybrid-disabled mode and a hybrid-enabled mode. The first and second access network are connected to the public network over a core network. The method comprises, when configuring the HCPE to the hybrid-enabled, reconfiguring routing in the core network to network traffic from the public network destined for the first network along a hybrid aggregation gateway, HAG, in the core network; and enabling, by the HCPE and HAG, the multi-path network access between the HCPE and the HAG over the first and second access network for network connections between the first network and the public network. The method further comprises, when configuring the HCPE to the hybrid-disabled mode, disabling the multi-path network access by the HCPE thereby providing single path network access to the first network; and reconfiguring the routing to bypass the HAG for network traffic between the first network and the public network.

In the hybrid-disabled mode, the HCPE functions as a regular CPE and none of the traffic passes by the HAG. The HCPE can still have access to the two access networks but is not able to provide on-path hybrid network access because the HAG is bypassed. When the HCPE is reconfigured to the hybrid-enable mode, at least the network traffic from the public network towards the hybrid-enabled HCPE is routed along the HAG, irrespective of whether hybrid network access is actually used. Because of this rerouting, it becomes possible to provide on-path multi-path network access between the HAG and the HCPE. This is because single path traffic from the public network can now be converted to multi-path traffic by the HAG. Traffic from the HCPE to the public network can also reach for multi-path to single-path aggregation in different ways as shown by the various embodiment. As routing is performed based on network addressing, the reconfiguring is done for the reconfiguring HCPE but stays unaltered for other HCPEs. There is thus no need put the HAG in the network route of all the HCPEs to achieve on-path hybrid network access.

When in hybrid-enabled mode the multi-path network access can then be provided by converting network connections between the first network and the public network to multipath network connections between the HCPE and the HAG.

For downstream traffic from the public network to the first network, the multi-path network access may be provided as follows: by the HAG, receiving the downstream traffic by the routing, converting the downstream traffic to multi-path downstream traffic, and sending the multi-path downstream traffic to the HCPE over the first or second access network; and by the HCPE, receiving the multi-path downstream traffic, converting it back to single-path downstream traffic and forwarding the single-path downstream traffic to the first network.

According to an example embodiment, for upstream traffic from the first network to the public network, the multi-path network access is provided as follows: by the HCPE, converting the upstream traffic to multi-path upstream traffic, changing the original destination address of upstream traffic to the network address of the HAG, and sending the multi-path upstream traffic to the HAG; and by the HAG, converting the multi-path upstream traffic back to single-path upstream traffic, changing the destination address back to the original address and sending the single-path upstream traffic to the public network.

In other words, the upstream traffic explicitly addresses the HAG by network address conversion. This has the advantage that no additional rerouting configuration is needed when configuring hybrid-enabled mode.

According to an example embodiment, the method further comprises, when configuring the HCPE to the hybrid-enabled mode, reconfiguring routing of network traffic from the HCPE destined for the public network along the HAG, in the core network. In other words, traffic is rerouted in both upstream and downstream along the HAG.

The providing multi-path connectivity may then further comprise, for upstream traffic from the first network to the public network: by the HCPE, converting the upstream traffic to multi-path upstream traffic and sending the multi-path upstream traffic to the HAG; and by the HAG, receiving the multi-path upstream traffic by the routing, converting the multi-path upstream traffic back to single-path upstream traffic, and sending the single path traffic to the public network.

According to an example embodiment, the method further comprises, when the HCPE is configured in the hybrid-enabled mode, by the HCPE and HAG, providing a single-path network access along the first or second access network.

Switching between the hybrid-disabled mode and the hybrid-enabled mode may further be performed by sending an instruction to the core network to reconfigure the routing accordingly.

Such instruction may for example be issued from the HCPE or from the operator. The instruction may for example by sent from the HCPE to the HAG and then from the HAG to the HCPE.

The switching from the non-hybrid mode to the hybrid-enable mode may be performed when a minimum bandwidth requirement of the first access network is not fulfilled.

Vice versa, the switching from the hybrid-enabled mode back to the non-hybrid mode may be performed when the minimum bandwidth requirement of the first access network is again fulfilled.

According to another example aspect, the disclosure relates to a control unit for providing a first network multi-path network access to a public network; wherein the first network is connected to a first and second access network by a hybrid customer premises equipment, HCPE, configurable to operate according to a hybrid-disabled mode and a hybrid-enabled mode; wherein the first and second access network are connected to the public network over a core network; wherein the control unit is configured to perform the following steps:
upon receiving an instruction to configure the HCPE to the hybrid-enabled mode:
   - reconfiguring routing in the core network to route network traffic from the public network destined for the first network along a hybrid aggregation gateway, HAG, in the core network; and
   - reconfiguring the HCPE and HAG to enable the multi-path network access between the HCPE and the HAG over the first and second access network for network connections between the first network and the public network;
and upon receiving an instruction to configure the HCPE to the hybrid-disabled mode:
   - reconfiguring the HCPE to disable the multi-path network access by the HCPE thereby providing single path network access to the first network; and
   - reconfiguring the routing to bypass the HAG for network traffic between the first network and the public network.

According to another example aspect, the disclosure relates to a communication system comprising a first and second access network, a hybrid customer premises equipment, HCPE, a core network, and a hybrid aggregation gateway, HAG, within the core network; wherein the hybrid customer premises equipment, HCPE, connects a first network to the first and second access network; wherein the HCPE is configurable to operate according to a hybrid-disabled mode and a hybrid-enabled mode; wherein the first and second access network are connected to a public network over the core network; and wherein the communication system is further configured to, upon configuring the HCPE to the hybrid-enabled mode:
- route network traffic from the public network destined for the first network along the hybrid aggregation gateway, HAG, in the core network; and
- by the HCPE and HAG, enabling the multi-path network access between the HCPE and the HAG over the first and second access network for network connections between the first network and the public network; and, upon configuring the HCPE to the hybrid-disabled mode:
- disable the multi-path network access by the HCPE thereby providing single path network access to the first network; and
- reconfigure the routing to bypass the HAG for network traffic between the first network and the public network.

According to another example aspect, the disclosure relates to a computer program product comprising computer-executable instructions for causing a communication system to perform the method according to the first example aspect.

### Brief Description of the Drawings

Some example embodiments will now be described with reference to the accompanying drawings.
Fig. 1A shows a communication system for providing network access as known in the art;
Fig. 1B shows traffic flows along networking paths in the communication system of Fig. 1A;
Fig. 2A shows a communication system for providing hybrid network access as known in the art;
Fig. 2B shows traffic flows along networking paths in the communication system of Fig. 2A;
Fig. 3A shows a communication system with a hybrid customer premises equipment operating in a hybrid-disabled operation mode according to an example embodiment;
Fig. 3B shows traffic flows along networking paths in the communication system of Fig. 3B;
Fig. 4A shows a communication system with a hybrid customer premises equipment operating in a hybrid-enabled operation mode with single-path network traffic according to an example embodiment;
Fig. 4B shows traffic flows along networking paths in the communication system of Fig. 4B;
Fig. 5A shows a communication system with a hybrid customer premises equipment operating in a hybrid-enabled operation mode with multi-path network traffic according to an example embodiment;
Fig. 5B shows traffic flows along networking paths in the communication system of Fig. 5B;
Fig. 6A shows a communication system with a hybrid customer premises equipment operating in a hybrid-enabled operation mode with single-path network traffic according to another example embodiment
Fig. 6B shows traffic flows along networking paths in the communication system of Fig. 5B;
Fig. 7A shows a communication system with a hybrid customer premises equipment operating in a hybrid-enabled operation mode with multi-path network traffic according to another example embodiment; and
Fig. 7B shows traffic flows along networking paths in the communication system of Fig. 5B;
Fig. 8 illustrates steps performed by a hybrid customer premises equipment and hybrid access gateway for switching from a hybrid-disabled mode to a hybrid-enable mode according to an example embodiment; and
Fig. 9 shows an example embodiment of a suitable computing system for performing various steps according to embodiments of the invention.

### Detailed Description of Embodiment(s)

The present disclosure relates to hybrid network access which is a network access architecture for broadband access networks where two or more different network access technologies are combined to improve bandwidth offered to subscribers. One example combination is an xDSL access network and a wireless access network such as LTE. Various example embodiments are described below by this example combination. Other combinations are also possible such as for example combinations based on DOCSIS based access networks, WiMAX based access networks, 5G cellular access networks, and satellite networks.

The present disclosure relates to network connections between a source and destination. A network connection is understood as a communication session between two networking nodes over which network packets carrying payload data is carried. A network connection between a source and destination may be defined by a source network address and destination network address, e.g. using the IPv4 or IPv6 Internet Protocol addressing scheme. A network connection according to example embodiments is further defined according to a transport layer protocol providing task-specific data exchange to higher layer application protocols. Example transport layer protocols are the Transmission Control Protocol, TCP, the User Datagram Protocol, UDP, and Stream Control Transmission Protocol, SCTP. A plurality of network packets exchanged over a network connection are further also referred to as network traffic, data traffic or data flow. Example embodiments further related to multi-path network connections which are network connections within which network packets can be transported over multiple paths simultaneously while appearing as a single network connection to the source and destination networking nodes. One example multi-path networking protocol is Multipath TCP, MPTCP, as published by the IETF in March 2020 as the Multipath TCP v1 specification in RFC 8684.

The present disclosure further relates to hybrid access networks using such multi-path network connections, Layer 4 multipath transport services, for connecting a subscriber to a public network. In telecommunications, a subscriber is connected to a network service provider via an access network. The service provider can then provide different services from within its core network and further connect the subscriber to the Internet. Traditionally the subscriber's private or local network is connected by a customer premises equipment, CPE, to a wired access network, e.g., to a digital subscriber line, DSL, access network, a cable access network, or an optical fibre network. Hybrid network access or shortly hybrid access network access is provided by the coordinated and simultaneous use of two or even more heterogeneous access paths along different access networks. These different access paths are then established between the CPE at the subscriber's side and a hybrid access gateway, shortly HAG, within the operator's core network. The CPE that supports such hybrid access is further denoted as a hybrid CPE or, shortly, HCPE. The Multipath Transmission Control Protocol may be used to set up multiple Transmission Control Protocol (TCP) subflows over the different access networks. Hybrid network access using MPTCP is further also referred to as MPTCP hybrid access. In MPTCP hybrid access, the single path networks connections between networking nodes in the subscriber's private network and networking nodes in the public network are locally converted to multi-path network connections between the HCPE and the HAG. The standard TCP flow and congestion control schemes may then be used to control the real time HCPE to HAG flow control. The HCPE and HAG are then responsible for managing the MPTCP hybrid access paths, including establishment and tear down. An overview of different implementations for MPTCP hybrid access is disclosed by the broadband forum in the technical report TR-378, 'Nodal Requirements for Hybrid Access Broadband Networks', Issue: 1, Issue Date: May 2019.

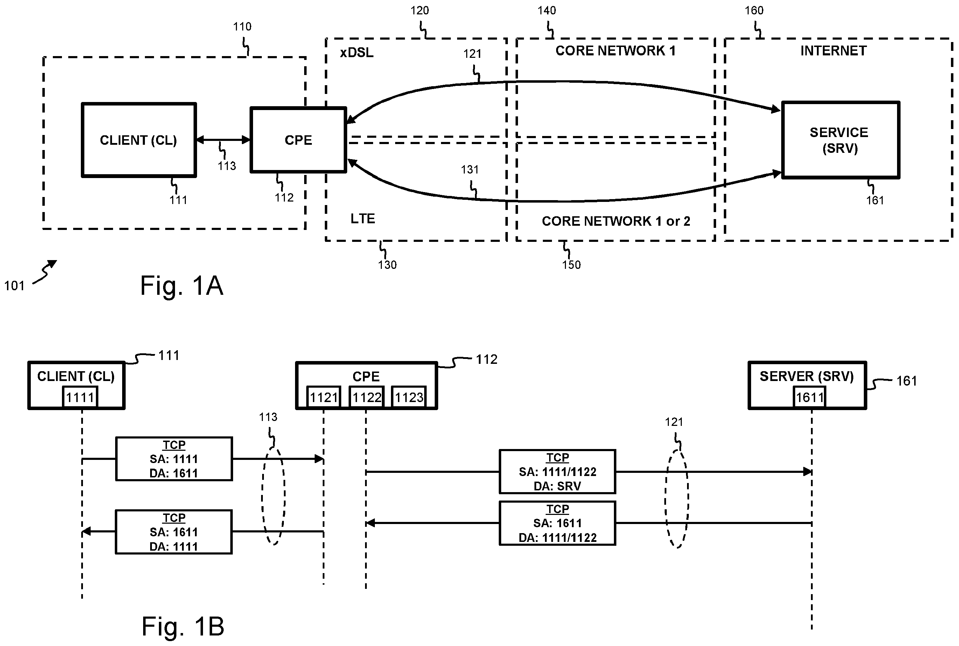

Fig. 1A illustrates a communication system 101 that does not provide hybrid network access as known in the art. Communication system 101 provides a subscriber network access to a public network 160 such as the Internet, i.e. a client networking node 111 within the subscriber's local or private network 110 can exchange network packets with a networking node 161 within the public network 160. To this end, a customer premises equipment 112 connects the subscriber's network 110 with a wired or wireless access network, e.g., a xDSL access network 120 or wireless LTE access network 130. These access networks 120, 130 connect to a service provider network 140, 150 also referred to as a core network which further connect to the Internet. Core network 140 may be operated by the same operator as core network 150 or by a different operator. CPE 112 may connect to either one of access networks 120, 130, but a specific network connection, e.g., a TCP/IP connection, between a client 111 and server 161, always uses the same access network, i.e., uses the same networking path 121 or 131. The system 100 may be configured to provide network access over the wired access network 120 by default, i.e., traffic 113 from or for network 110 follows the path 121 by default. The wireless access network 130 may then be used as a backup or failover solution, i.e., CPE 112 can switch from access network 120 to access network 130 when a problem occurs on access network 120. From then on, traffic follows the path 131.

Fig. 1B illustrates TCP/IP packets exchanged between a network interface 1111 of client 111 and a network interface 1121 of CPE 112 defining traffic 113. Fig. 1B further illustrates TCP/IP packets exchanged between network interface 1122 of CPE 112 that connects to the first access network 120 and network interface 1611 of server 161 defining traffic 121. The term 'SA' indicate the source IP address in the network packet and the term 'DA' indicates the destination IP address in the network packet. For traffic 121, addressing may have different values, i.e. 1111 or 1122, depending on whether the CPE uses source network address translation. The example network connection between client 111 and server 161 is established over the first access network 120 and, therefore, the network interface 1123 to the second access network 130 is not used for the connection.

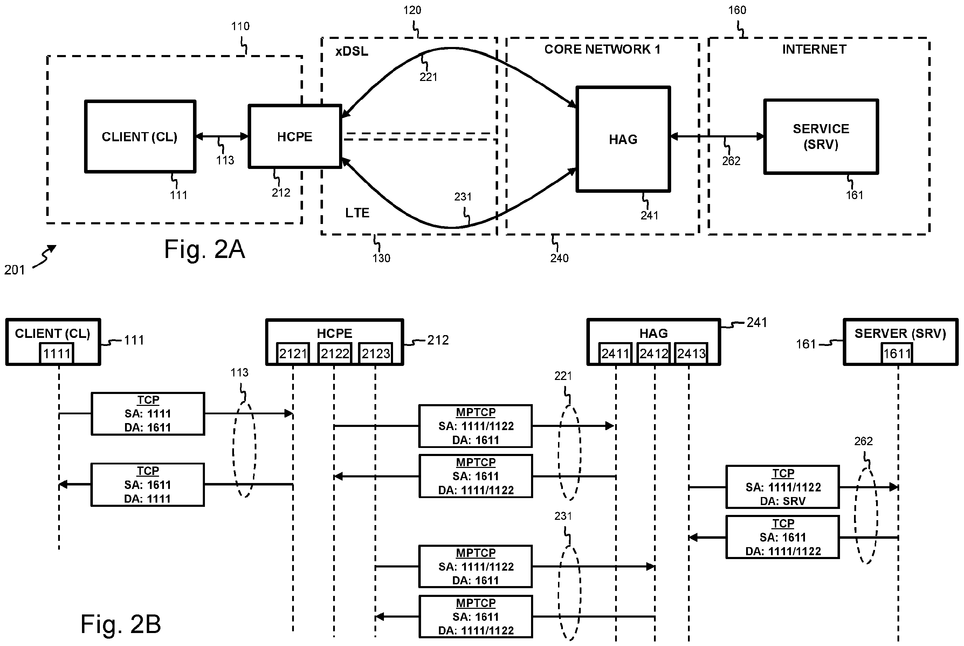

Fig. 2A illustrates a communication system 201 that provides hybrid network access as known in the art and as also disclosed by the broadband forum in the technical report TR-378, 'Nodal Requirements for Hybrid Access Broadband Networks', Issue: 1, Issue Date: May 2019. The components of system 201 that perform the similar function as in system 100 have the same reference number. The subscriber's terminal node 111 and/or private network 110 is connected to the wired access network 120 and wireless access network 130 by hybrid customer premises equipment, HCPE, 212. The HCPE 212 converts single network paths 113 between client 111 and HCPE 212 to multiple network paths 221, 231 at the Layer 4 transport layer that run over the respective access networks 120 and 130. The multiple network paths 221, 231 are converted back to a single network path 262 by a hybrid access gateway 241, HAG, located within the core network 240 of the network service provider. The multi-path conversion is performed at the Layer 4 transport layer, e.g., for TCP/IP network traffic wherein the TCP/IP segments are transported over the multiple paths according to the Multipath TCP v1 specification from RFC 8684. As the HAG 241 performs the multi-path conversion, all traffic 262 from the public network to the subscriber is routed along the HAG which then forwards the packets to the HCPE using either a single path transport protocol such as TCP or a multi-path transport protocol such as multi-path TCP.

Fig. 2B illustrates TCP/IP packets exchanged between network interface 1111 of client 111 and a network interface 2121 of CPE 212 defining traffic 113. Fig. 2B further illustrates MPTCP/IP packets exchanged between network interface 2122 of HCPE 212 that connects to the first access network 120 and network interface 2411 of HAG 241. These packets are indicative for traffic along the first or primary network path 221. Fig. 2B further shows MPTCP/IP packets exchanged between network interface 2123 of HCPE 212 that connects to the second access network 130 and network interface 2412 of HAG 241. These packets are indicative for traffic along the second or auxiliary network path 231. Fig. 2B further shows TCP/IP packets exchanged between network interface 2413 of the HAG 241 and the network interface 1611 of the server 161.

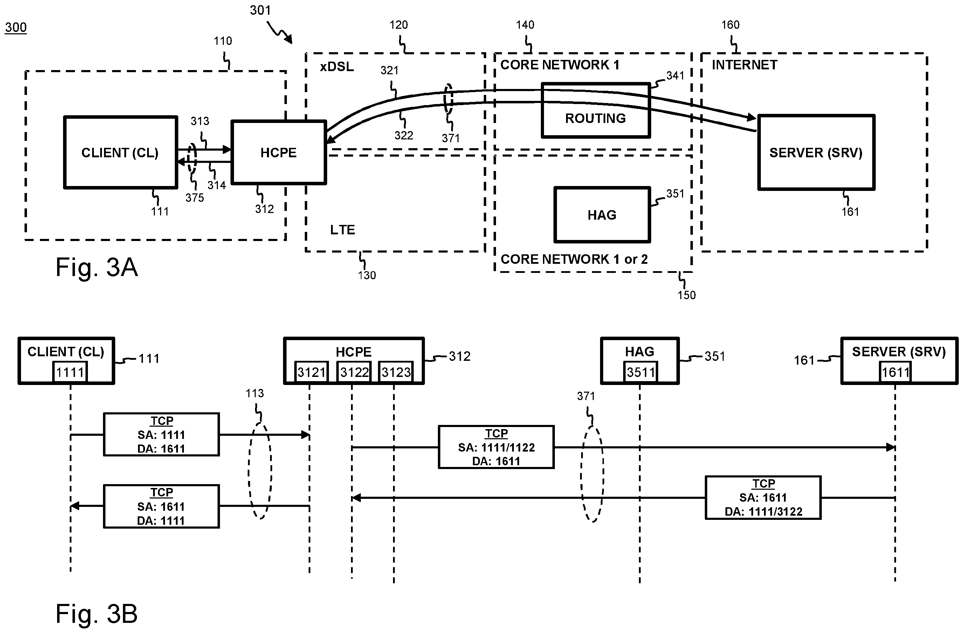

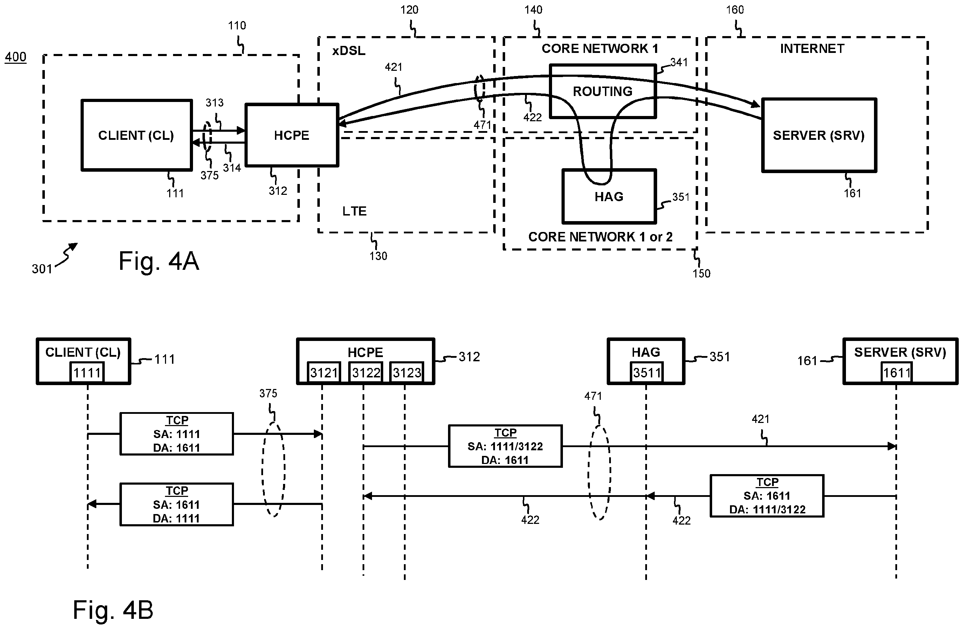

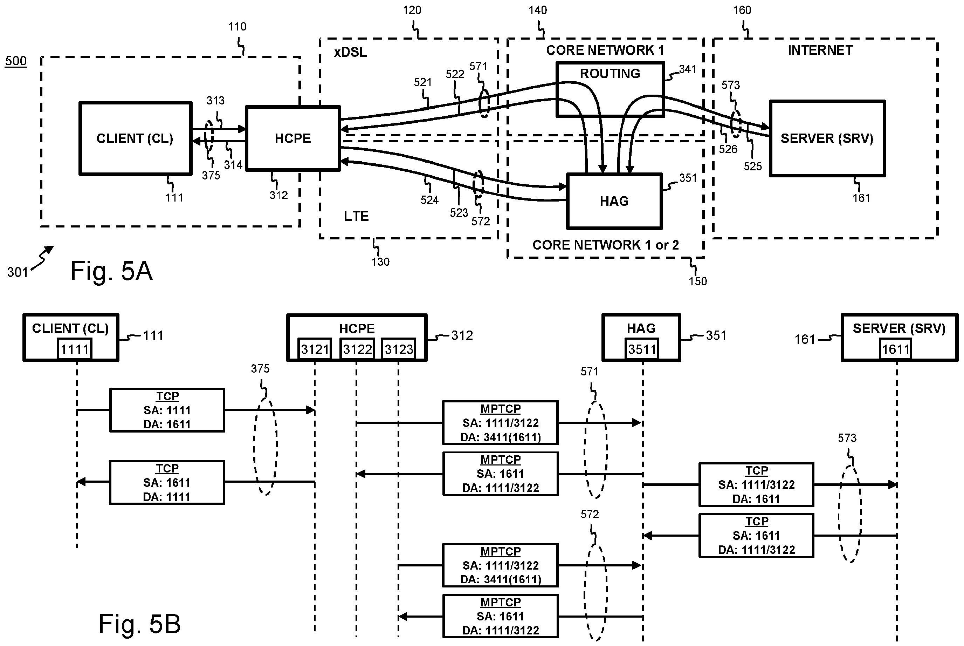

Fig. 3A, 3B, 4A, 4B, 5A, and 5B illustrate network paths in a communication system 301 according to an example embodiment. Communication system 301 provides subscriber's network 110 access to the public network 160 such as the Internet. System 301 only shows one local network 110 of a subscriber for clarity's sake. A person skilled in the art will understand that a system 301 will have a plurality of such subscribers, e.g., more than thousand or ten thousand. As an example, a network client 111 within the subscriber's local or private network 110 has an ongoing network connection with a server 161 in the public network 160. The subscriber is connected to the public network 160 by a hybrid customer premises equipment 312 over the two access networks 120, 130 as already described with reference to Fig. 1 and Fig. 2. HCPE 312 can be configured in a hybrid-disabled mode 300 as further described with reference to Fig. 3A and 3B, in a hybrid-enabled mode 400 with single-path network access as further described with reference to Fig. 4A and 4B, and in a hybrid-enabled mode 500 with multi-path network access as further described with reference to Fig. 5A and 5B.

According to the hybrid-disabled mode 300, the connection between client 111 and server 161 is a single-path network connection, i.e. traffic can only flow via the first access network 321. To this end, the HCPE 312 does not provide single- to multi-path conversion for upstream traffic 313, 321 or vice versa for downstream traffic 322, 314. All network traffic is then forwarded along the wired access network 120 and bypasses the hybrid access gateway 351, i.e. routing 341 within the core network 140 does not forward the packets along the HAG 351. Therefore, although HCPE 312 is capable of hybrid network access, it is not supported from the side of the network service provider. In the hybrid-disabled mode 300, the HCPE 312 may still use the second access network 130, e.g., as a backup for when the first access network 120 is no longer operable, but a network connection uses one network path.

Fig. 3B illustrates TCP/IP packets exchanged between a network interface 1111 of client 111 and a network interface 3121 of CPE 312 which are indicative for traffic 375. Fig. 3B further illustrates TCP/IP packets exchanged between network interface 3122 of CPE 312 that connects to the first access network 120 and network interface 1611 of server 161 defining traffic 121. The example network connection between client 111 and server 161 is established over the first access network 120 and, therefore, the network interface 3123 to the second access network 130 is not used for the connection. As the HCPE is operating to the hybrid-disabled mode, network traffic 371 bypasses the HAG 341.

When the HCPE 312 switches to the hybrid-enabled mode 400 as illustrated in Fig. 4A and 4B multi-path network access is enabled and thus possible. To do so, the routing 341 within the core network 140, 150 is reconfigured. By this reconfiguration, downstream traffic 422 originating from the public network 160 and destined for the hybrid-enabled HCPE 312 is routed along the HAG 351, i.e., downstream traffic 422 is forwarded to the HAG. In the example embodiment of Fig. 4A and 4B, a single-path network path comprising single path 375 and 471 between client 111 and server 161 is shown when the HCPE is configured in hybrid-enabled mode 400 but only provides single-path network access.

In case of upstream traffic 313, client 111 addresses as destination address server 161 as also shown in Fig. 4B. The upstream traffic 313 is then forwarded along local network 110 to the local network interface 3212 of HCPE 312. HCPE 312 is in hybrid-enabled mode 400, but it is not performing multi-path conversion. It therefore forwards upstream traffic 313 as traffic 421 along the first access network 120. Optionally, HCPE 312 may perform source network address translation, sNAT if the network address of client 111 is a private network address. As the HAG is bypassed, the upstream traffic 313 is directly routed from the core network 140 to the public network 160 and thereupon arrives at server 161. Downstream traffic 422 originating from the server will address the client 111 or the HCPE when performing sNAT and be routed to the core network 140. Within the core network 140, the downstream traffic destined for local network 110 is then routed to the HAG 351. As the connection is a single-path connection, the HAG will not perform any conversion and forward the downstream packet to the HCPE along the first access network 120. The HCPE then forwards the downstream traffic 314 to the client 111. HCPE 312 may further perform network address translation. Besides the different routing of the downstream traffic 422, single path network connections between network 110 and public network 160 are the same.

Fig. 4B illustrates TCP/IP packets exchanged between a network interface 1111 of client 111 and a network interface 3121 of CPE 312 which are indicative for traffic 375. Fig. 3B further illustrates TCP/IP packets exchanged between network interface 3122 of CPE 312 that connects to the first access network 120 and network interface 1611 of server 161 defining traffic 421. The example network connection between client 111 and server 161 is established over the first access network 120 and, therefore, the network interface 3123 to the second access network 130 is not used for the connection. As the HCPE is operating to the hybrid-enabled mode, network traffic 471 bypasses the HAG 341 in upstream, but passes by the HAG for downstream traffic.

When in hybrid-enabled mode 400, HCPE 312 can provide hybrid network access to network 110 in cooperation with HAG 351 because of the different routing configuration for downstream traffic. Fig. 5A and 5B show a multi-path network connection between client 111 and server 151 when HCPE 312 is in hybrid-enabled mode and when providing multipath network access for the network connection between client 111 and server 161, further referred to as mode 500. In mode 500, the network path 375 between client 111 and HCPE 312 is similar to the situation as depicted in Fig. 3 and 4 for both upstream traffic 313 and downstream traffic 314. Between the HCPE and HAG the connection 375 is converted in multi-path connection with a first or primary path 571 along the first access network 120 and a second or auxiliary path 572 along the second access network 130. Both paths 571 and 572 are aggregated together by the HAG 351 to single path 573.

For upstream network traffic 313, the HCPE has the choice to forward the traffic along the first access network 120 over path 521 to the HAG 351. As upstream traffic is not by default routed to the HAG, the HCPE will replace the address of the server 151 with the address of the HAG as destination address of the upstream traffic as also illustrated in Fig. 5B. Thereupon, the upstream traffic is forward along the first access network 120. Within the core network 140, 150 the traffic will be routed to its destination, i.e. the HAG 351. In the HAG, the destination address of the traffic is changed to that of server 161. The address of the server may be part of the upstream traffic, e.g. specified in an optional field. The address of the server 161 by also be communicated by the HCPE to the HAG during the establishment of the connection between the client 111 and server 151. Thereupon the upstream traffic is converted back to single-path upstream traffic 573 and forwarded to server 151 which receives the traffic as coming from the HCPE or the client.

For upstream network traffic 313, the HCPE also has the choice to forward the traffic along the second access network 130 over path 523 to the HAG 351. For this second or auxiliary path 523, the HAG may be provided along the network route from the second access network to the public network 150, i.e. the HAG is on-path for the second access network. This may for example be the case when the HAG is located within the service network 150 of the operator of the second network 130. For this on-path case, the HCPE converts the upstream traffic 313 to multipath upstream traffic 523 without further changing the destination address. The packet is then forwarded along the second access network 130 and will be routed to the on-path HAG 351. As the network address remained unchanged, the HAG then converts the upstream multi-path packets to single path packets and forwards them as upstream traffic 573 to the server 151.

For the second or auxiliary path 523, the HAG may also be provided off-path such that packets that are forwarded over the second access network 130 do not necessarily pass by the HAG during routing through core network 150. In this case the HCPE may perform a similar multipath conversion as for the first upstream path 521, i.e. replace the destination address in the upstream traffic by that of that HAG and provide the final destination address of server 151 within an optional field and/or during the setup of the connection between the client 111 and server 151.

For upstream traffic, the HAG 351 will be transparent for the server 151, i.e. the connection 573 will appear as a single path connection with the HCPE or the client 111 depending whether network address translation is performed.

For downstream traffic 525 from the server 150 to the client 111, the server will address the upstream packets with the network address of the HCPE or Client, depending whether network address translation was performed. As the HAG 351 is transparent to the server 161, the routing 341 within the core network is configured to forward the downstream traffic 523 along the HAG 351. The HAG will then identify connection 573 as being a multipath connection and convert the single path downstream 526 to downstream multipath traffic flows 522 and 523. When selecting the second auxiliary path 524, the HAG addresses the wireless interface of the HCPE such that the packets are routed to the HCPE along the second access network 130. When selecting the main path 522, the HAG addresses the wired interface of the HCPE such that the packets are routed to the HCPE along the first access network 120. At the HCPE, the multipath downstream traffic 522, 524 is converted back to the single path downstream traffic 314.

Fig. 5B illustrates TCP/IP packets exchanged between network interface 1111 of client 111 and a network interface 3121 of HCPE 312 defining traffic 313. Fig. 5B further illustrates MPTCP/IP packets exchanged between network interface 3122 of HCPE 312 that connects to the first access network 120 and network interface 3411 of HAG 241. These packets are indicative for traffic along the first or primary network path 571. Fig. 5B further shows MPTCP/IP packets exchanged between network interface 3123 of HCPE 312 that connects to the second access network 130 and network interface 3511 of HAG 351. These packets are indicative for traffic along the second or auxiliary network path 572. For the upstream packets of traffic 571 and 572 the destination address of the server is shown between brackets because it is not in the actual destination address field of the MTCP/IP packets but provided indirectly to the HAG 351. Fig. 5B further shows TCP/IP packets exchanged between HAG 351 and server 161.

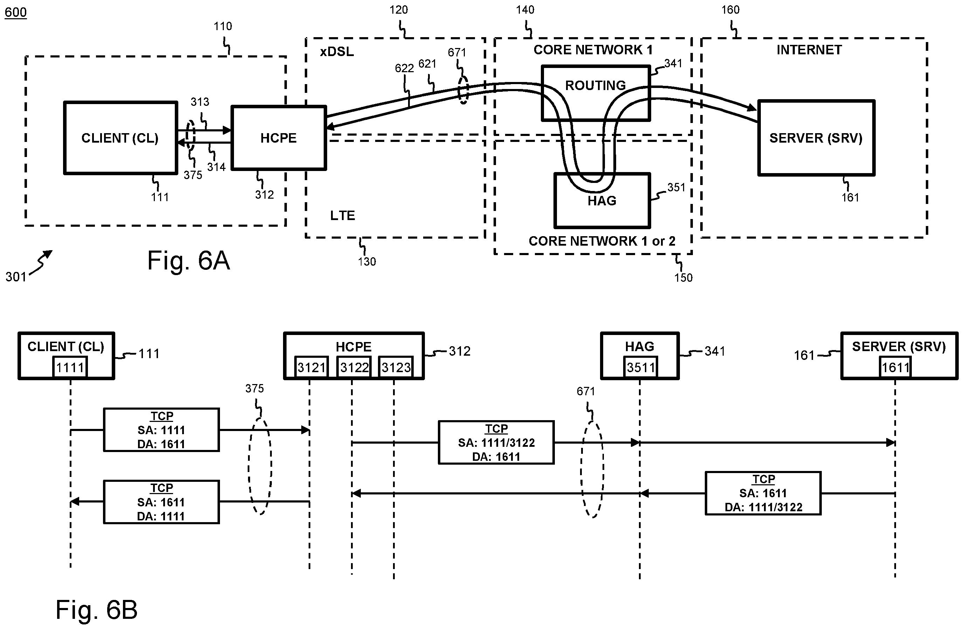

Fig. 6A and 6B illustrates the communication system 301 when configured in a hybrid-enabled mode 600 according to an example embodiment. For downstream traffic 622, the routing configuration in the core network 140, 150 is the same as for the hybrid-enabled mode 400 of Fig. 4. For upstream traffic 621, the routing within core network 140, 150 is now also reconfigured to forward network traffic along the HAG 351.

When the HCPE 312 switches from the hybrid-disabled mode 300 to the hybrid-enabled mode 600, then multi-path network access is enabled and thus possible between HCPE 312 and HAG 351. To do so, the routing 341 within the core network 140, 150 is reconfigured. By this reconfiguration, downstream traffic 622 originating from the public network 160 and destined for the hybrid-enabled HCPE 312 is routed along the HAG 351, i.e., downstream traffic 622 is forwarded to the HAG 351. Further, also upstream traffic 621 along the first access network 120 is also routed to the HAG 351. In the example embodiment of Fig. 6A and 6B, a single-path network path comprising single path 375 and 671 between client 111 and server 161 is shown when the HCPE is configured in hybrid-enabled mode 600 but provides single-path network access.

Downstream traffic 622 originating from the server will address the client 111 or the HCPE 312 when performing sNAT. Traffic 622 is then routed to the core network 140. Within the core network 140, the downstream traffic 622 for local network 110 is then routed to the HAG 351. As the connection is a single-path connection, the HAG 351 will not perform any conversion and forward the downstream packet to the HCPE along the first access network 120. The HCPE then forwards the downstream traffic 314 to the client 111. HCPE 312 may further perform network address translation. Besides the different routing of the downstream traffic 622, single path network connections between network 110 and public network 160 are the same for hybrid-enable mode 600 and hybrid-disabled mode 300.

Upstream traffic 313 originating from client 111 will be forwarded by the HCPE 312 to the core network 140 over the first access network 120. Upon arrival in the core network 140, the upstream traffic 621 destined for server 161 is rerouted along the HAG 351. As the upstream traffic is single path network traffic, the HAG just forwards the upstream traffic 351 to the public 160 and, hence, to the server 161.

Fig. 6B illustrates TCP/IP packets exchanged between a network interface 1111 of client 111 and a network interface 3121 of CPE 312 which are indicative for traffic 375. Fig. 6B further illustrates TCP/IP packets exchanged between network interface 3122 of CPE 312 that connects to the first access network 120 and network interface 1611 of server 161 defining traffic 671. The example network connection between client 111 and server 161 is established over the first access network 120 and, therefore, the network interface 3123 to the second access network 130 is not used for the connection. As the HCPE is operating to the hybrid-enabled mode 600, network traffic 671 passes by the HAG for both upstream and downstream traffic.

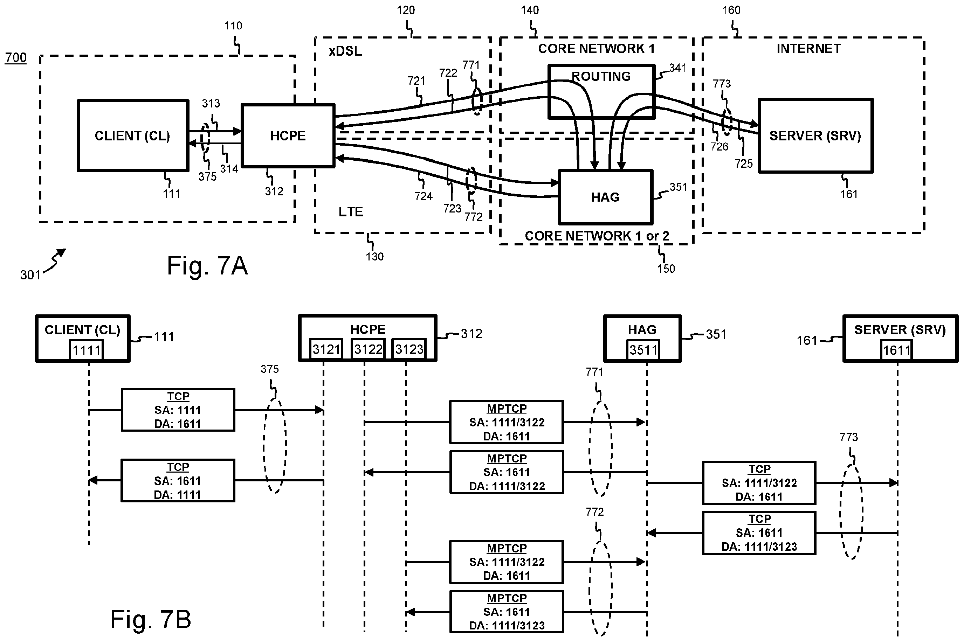

When in hybrid-enabled mode 600, HCPE 312 can provide hybrid network access to network 110 in cooperation with HAG 351 because of the different routing configuration for both upstream traffic 621 and downstream traffic 622. Fig. 7A and 7B shows a network connection between client 111 and server 161 when HCPE 312 is in hybrid-enable mode 600 and provides multipath network access for the connection, further referred to as mode 700. In mode 700, the network path 375 between client 111 and HCPE 312 is similar to the situation as depicted in Fig. 3 and 6 for both upstream traffic 313 and downstream traffic 314. Between the HCPE and HAG the connection 375 is converted in a multi-path connection with a first path 771 along the first access network 120 and a second path 772 along the second access network 130. Both paths 771 and 772 are aggregated together to single path 773 within HAG 351.

For upstream network traffic 313, the HCPE 312 now has the choice to forward the traffic along the first access network 120 over primary path 721 to the HAG 351. As upstream traffic 721 is by default routed to the HAG, the HCPE does not need to replace the address of the server 161 with the address of the HAG 351 as destination address of the upstream traffic 721. Within the core network 140, 150 the traffic 721 will be routed along the HAG 351. As the destination address in the upstream traffic 721 remained unchanged in comparison with mode 500, the HAG 351 will forward the upstream traffic 721 to the public network 160 and thus the server 161.

For upstream network traffic 313, the HCPE 312 also has the choice to forward the traffic along the second access network 130 over path 723 to the HAG 351. For this second or auxiliary path 723, the HAG may be provided along the network route from the second access network to the public network 150, i.e. the HAG is on-path for the second access network. This may for example be the case when the HAG is located within the service network 150 of the operator of the second network 130. For this on-path case, the HCPE converts the upstream traffic 313 to multipath upstream traffic 723 without further changing the destination address. The packet is then forwarded along the second access network 130 and will be routed to the on-path HAG 351. As the network address remained unchanged, the HAG then converts the upstream MPTCP packets to single path TCP packets and forwards them as upstream traffic 725 to the server 151.

For the second or auxiliary path 723, the HAG may also be provided off-path such that packets that are forwarded over the second access network 130 do not necessarily pass by the HAG during routing through core network 150. In this case the HCPE may perform a similar multipath conversion as for the first upstream path 521 as described with reference to Fig. 5, i.e. replace the destination address in the upstream traffic by that of that HAG and provide the final destination address of server 151 within an optional field and/or during the setup of the connection between the client 111 and server 151.

For upstream traffic, the HAG 351 will be transparent for the server 161, i.e. the network connection will appear as a single path connection with the HCPE or the client 111 depending whether network address translation is performed.

For downstream traffic 725 from the server 150 to the client 111, the server will address the upstream packets with the network address of the HCPE or Client, depending whether network address translation was performed. As the HAG 351 is transparent to the server 161, the routing 341 within the core network is configured to forward the downstream traffic 723 along the HAG 351. The HAG will then identify connection 773 as being part of a multipath connection and convert the single path downstream 726 to downstream multipath traffic flows 722 and 724. When selecting the second auxiliary path 724, the HAG addresses the wireless interface of the HCPE such that the packets are routed to the HCPE along the second access network 130. When selecting the main path 722, the HAG addresses the wired interface of the HCPE such that the packets are routed to the HCPE along the first access network 120. At the HCPE, the multipath downstream traffic 722, 724 is converted back to the single path downstream traffic 314.

Fig. 7B illustrates TCP/IP packets exchanged between network interface 1111 of client 111 and a network interface 3121 of HCPE 312 defining traffic 313 during operation mode 700. Fig. 7B further illustrates MPTCP/IP packets exchanged between network interface 3122 of HCPE 312 that connects to the first access network 120 and network interface 3411 of HAG 351. These packets are indicative for traffic along the first or primary network path 571. Fig. 7B further shows MPTCP/IP packets exchanged between network interface 3123 of HCPE 312 that connects to the second access network 130 and network interface 3511 of HAG 351. These packets are indicative for traffic along the second or auxiliary network path 772. The primary flow 771 and auxiliary flow 772 do both have the server 161 as destination address for upstream traffic because the HAG is provided on path for both the first and second access network 120, 130.

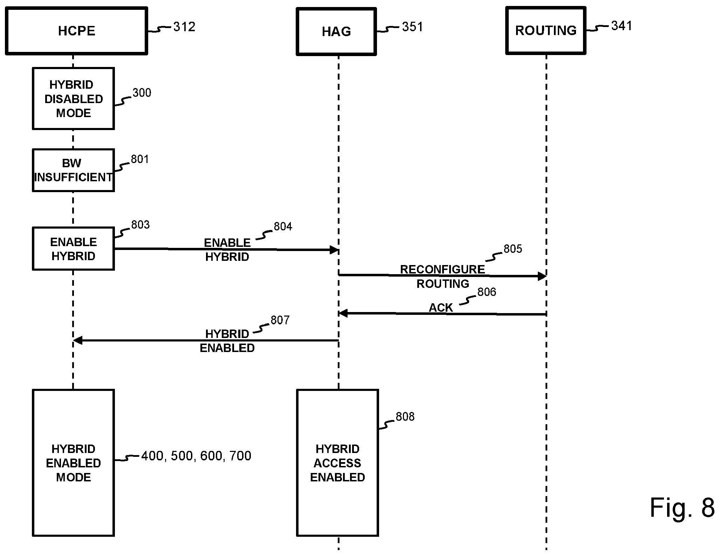

Fig. 8 illustrates steps performed by the HCPE 312 and HAG 351 within communication system 301 when switching from hybrid disabled mode 300 to hybrid enabled mode 400, 500, 600, and 700 according to an example embodiment. At a certain moment in time it is assumed that HCPE 312 operates in the hybrid enabled mode 300 as described with reference to Fig. 3. During this mode 300, all connections between local network 110 and public network 160 are single path network connections running over access network 120. At a certain moment in time, HCPE may determine that the bandwidth offered by access network 120 is not sufficient as illustrated by step 801. This may be the case because the available bandwidth of access network 120 has dropped below a certain threshold. This may also be the case because the average throughput demand is higher than the bandwidth capacity of the first access network 120. The HCPE 312 then proceeds to step 803 wherein it instructs the HAG 351 by message 804 that it will enable hybrid network access. Thereupon, the HAG 351 reconfigures the routing within the core network to support hybrid-enabled mode as described with reference to figures 400 or 500. When the HAG 351 receives confirmation 806 that the routing has been reconfigured, it enables 808 hybrid access for HCPE 312 and confirms by message 807 to the HCPE 312 that it can start using hybrid network access. Upon receival of the confirmation 807 HCPE 312 can provide hybrid network access and provides the hybrid enabled mode 400, 500, 600, or 700 for network connections between local network 110 and public network 160. When in hybrid enabled mode, all new network connections can benefit from hybrid network access while existing connections can further exist as single-path network connections until they are terminated.

According to the example of Fig. 8, the mode switching is initiated by the HCPE 312 following a certain condition 801. The mode switching may equally be initiated by the HAG or any other controlling entity. Alternatively, a controlling entity may be configured to perform the actual reconfiguration steps 805, 806 upon instruction from for example the HAG or the HCPE. In this case, the controlling entity will issue a reconfiguration of the HCPE and HAG to the hybrid enabled mode and perform the reconfiguration of the routing. Vice versa, the controlling entity can also issue a reconfiguration of the HCPE and HAG to the hybrid disabled mode and perform the reconfiguration of the routing.

Reconfiguration of the routing according to example embodiment may be performed by methods as known in the art. Routing within the core network 140, 150 may for example be reconfigured according to policy-based routing, PBR. Routing of selected traffic to the HAG 341 may then be performed based on the network address of the HCPE 312 in either the source or destination address field of the traffic. Routing may further be performed dependent on higher layer protocols. For example, routing of traffic to the HAG may be performed for only TCP/IP traffic but not for other kinds of traffic which cannot benefit from multipath conversion.

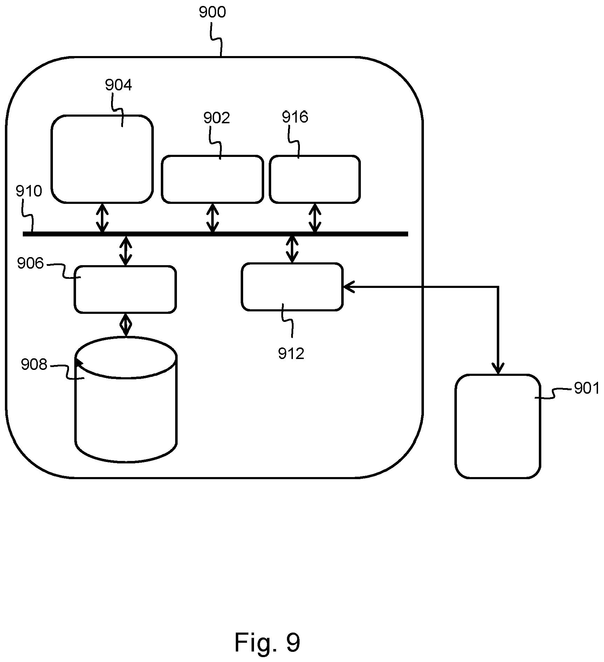

Fig. 9 shows a suitable computing system 900 enabling to implement embodiments networking components according to example embodiment such as client 111, HCPE 312, HAG 351 or server 161. Computing system 900 may in general be formed as a suitable general-purpose computer and comprise a bus 910, a processor 902, a local memory 904, one or more optional input interfaces 914, one or more optional output interfaces 916, a communication interface 912, a storage element interface 906, and one or more storage elements 908. Bus 910 may comprise one or more conductors that permit communication among the components of the computing system 900. Processor 902 may include any type of conventional processor or microprocessor that interprets and executes programming instructions. Local memory 904 may include a random-access memory (RAM) or another type of dynamic storage device that stores information and instructions for execution by processor 902 and/or a read only memory (ROM) or another type of static storage device that stores static information and instructions for use by processor 902. Input interface 914 may comprise one or more conventional mechanisms that permit an operator or user to input information to the computing device 900, such as a keyboard 920, a mouse 930, a pen, voice recognition and/or biometric mechanisms, a camera, etc. Output interface 916 may comprise one or more conventional mechanisms that output information to the operator or user, such as a display 940, etc. Communication interface 912 may comprise any transceiver-like mechanism such as for example one or more Ethernet interfaces that enables computing system 900 to communicate with other devices and/or systems. The communication interface 912 of computing system 900 may be connected to such another computing system by means of a local area network (LAN) or a wide area network (WAN) such as for example the internet. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example SATA disk drives, and control the reading and writing of data to and/or from these storage elements 908. Although the storage element(s) 908 above is/are described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for providing a first network (110) multi-path network access to a public network (160); wherein the first network (110) is connected to a first (120) and second (130) access network by a hybrid customer premises equipment, HCPE, (312) configurable to operate according to a hybrid-disabled mode (300) and a hybrid-enabled mode (400, 500, 600, 700); wherein the first (120) and second (130) access network are connected to the public network (160) over a core network (140); the method comprising:
when configuring the HCPE to the hybrid-enabled mode:
- reconfiguring (805) routing (341) in the core network to route network traffic (422, 526, 622, 726) from the public network destined for the first network along a hybrid aggregation gateway, HAG, (351) in the core network; and
- by the HCPE and HAG, enabling the multi-path network access (571-572, 771-772) between the HCPE and the HAG over the first and second access network for network connections between the first network and the public network;
and when configuring the HCPE to the hybrid-disabled mode:
- disabling the multi-path network access by the HCPE thereby providing single path network access (371) to the first network (110); and
- reconfiguring the routing (341) to bypass the HAG for network traffic (371) between the first network (110) and the public network (160).

2. The method according to claim 1 wherein, when the HCPE is in hybrid-enabled mode, providing multi-path connectivity by converting network connections (375, 573, 773) between the first network and the public network to multipath network connections (571-572, 771-772) between the HCPE (312) and the HAG (351).

3. The method according to claim 2 wherein the providing multi-path connectivity further comprises, for downstream traffic (526, 726) from the public network to the first network:
- by the HAG, receiving the downstream traffic (526, 726) by the routing, converting the downstream traffic to multi-path downstream traffic (522, 524, 722, 724), and sending the multi-path downstream traffic to the HCPE over the first or second access network; and
- by the HCPE, receiving the multi-path downstream traffic (522, 524, 722, 724), converting it back to single-path downstream traffic (314) and forwarding the single-path downstream traffic to the first network.

4. The method according to any one of claims 2 and 3 wherein the providing multi-path connectivity comprises, for upstream traffic (313) from the first network to the public network:
- by the HCPE, converting the upstream traffic (313) to multi-path upstream traffic (521, 523), changing the original destination address of upstream traffic to the network address of the HAG, and sending the multi-path upstream traffic to the HAG; and
- by the HAG, converting the multi-path upstream traffic (521, 523) back to single-path upstream traffic (525), changing the destination address back to the original address and sending the single-path upstream traffic to the public network.

5. The method according to any one of claims 2 and 3 wherein the method further comprises, when configuring the HCPE to the hybrid-enabled mode (700), reconfiguring routing of network traffic (721, 723) from the HCPE destined for the public network along the HAG, (351) in the core network.

6. The method according to claim 5 wherein the providing multi-path connectivity comprises, for upstream traffic (313) from the first network to the public network:
- by the HCPE, converting the upstream traffic (313) to multi-path upstream traffic (721, 723), and sending the multi-path upstream traffic to the HAG; and
- by the HAG, receiving the multi-path upstream traffic by the routing, converting the multi-path upstream traffic back to single-path upstream traffic (725), and sending the upstream traffic as single path traffic to the public network.

7. The method according to any one of the preceding claims wherein, when the HCPE is configured in the hybrid-enabled mode:
- by the HCPE and HAG, further providing a single-path operation mode along the first or second access network.

8. The method according to claim 1 further comprising switching between the hybrid-disabled mode and the hybrid-enabled mode by sending an instruction to the core network to change the routing accordingly.

9. The method according to any one of the preceding claims further comprising switching from the non-hybrid mode to the hybrid-enable mode when a minimum bandwidth requirement of the first access network is not fulfilled.

10. The method according to claim 9 further comprising switching from the hybrid-enabled mode back to the non-hybrid mode when the minimum bandwidth requirement of the first access network is again fulfilled.

11. The method according to any one of the preceding claims wherein the first access network is a wired access network.

12. The method according to any one of the preceding claims wherein the second access network is a wireless access network.

13. A control unit for providing a first network (110) multi-path network access to a public network (160); wherein the first network (110) is connected to a first (120) and second (130) access network by a hybrid customer premises equipment, HCPE, (312) configurable to operate according to a hybrid-disabled mode (300) and a hybrid-enabled mode (400, 500, 600, 700); wherein the first (120) and second (130) access network are connected to the public network (160) over a core network (140); wherein the control unit is configured to perform the following steps:
upon receiving an instruction to configure the HCPE to the hybrid-enabled mode:
- reconfiguring (805) routing (341) in the core network to route network traffic (422, 526, 622, 726) from the public network destined for the first network along a hybrid aggregation gateway, HAG, (351) in the core network; and
- reconfiguring the HCPE and HAG to enable (803, 804) the multi-path network access (571-572, 771-772) between the HCPE and the HAG over the first and second access network for network connections between the first network and the public network;
and upon receiving an instruction to configure the HCPE to the hybrid-disabled mode:
- reconfiguring the HCPE to disable the multi-path network access by the HCPE thereby providing single path network access (371) to the first network (110); and
- reconfiguring the routing (341) to bypass the HAG for network traffic (371) between the first network (110) and the public network (160).

14. A communication system (301) comprising a first (120) and second (130) access network, a hybrid customer premises equipment (312), HCPE, a core network (140, 150), and a hybrid aggregation gateway (351), HAG, within the core network; wherein the hybrid customer premises equipment, HCPE, (312) connects a first network (110) to the first (120) and second (130) access network; wherein the HCPE is configurable to operate according to a hybrid-disabled mode (300) and a hybrid-enabled mode (400, 500, 600, 700); wherein the first (120) and second (130) access network are connected to a public network (160) over the core network (140); and wherein the communication system is further configured to, upon configuring the HCPE to the hybrid-enabled mode:
- route network traffic (422, 526, 622, 726) from the public network destined for the first network along the hybrid aggregation gateway, HAG, (351) in the core network; and
- by the HCPE and HAG, enabling the multi-path network access (571-572, 771-772) between the HCPE and the HAG over the first and second access network for network connections between the first network and the public network; and, upon configuring the HCPE to the hybrid-disabled mode:
- disable the multi-path network access by the HCPE thereby providing single path network access (371) to the first network (110); and
- reconfigure the routing (341) to bypass the HAG for network traffic (371) between the first network (110) and the public network (160).

15. A computer program product comprising computer-executable instructions for causing a communication system to perform the method according to any of claims 1 to 12.
